Europäisches Patentamt

(19) European Patent Office

Office européen des brevets

(11) Numéro de publication : **0 349 419 B1**

(12) **FASCICULE DE BREVET EUROPEEN**

(45) Date de publication du fascicule du brevet :
05.02.92 Bulletin 92/06

(51) Int. Cl.⁵ : **B01J 27/232,** B01J 23/02,
B01J 23/10, B01J 37/03

(21) Numéro de dépôt : 89401840.7

(22) Date de dépôt : 27.06.89

(54) **Procédé de préparation d'un catalyseur apte à promouvoir la conversion oxydante du méthane en hydrocarbures supérieurs.**

(30) Priorité : 29.06.88 FR 8808766

(43) Date de publication de la demande :
03.01.90 Bulletin 90/01

(45) Mention de la délivrance du brevet :
05.02.92 Bulletin 92/06

(84) Etats contractants désignés :
BE DE ES FR GB IT NL

(56) Documents cités :
EP-A- 0 011 356
FR-A- 2 140 556
GB-A- 632 350

(72) Inventeur : **Forquy, Christian
Quartier Coos
F-64360 Monein (FR)**
Inventeur : **Tichit, Didier Résidence le Vallon
des Sources
1035 Avenue du Père Soulas
F-34000 Montpellier (FR)**
Inventeur : **Anglerot, Didier
10 Allées des Noisetiers
F-64000 Pau (FR)**

(74) Mandataire : **Boillot, Marc
SOCIETE NATIONALE ELF AQUITAINE
Division Propriété Industrielle Tour Elf
F-92078 Paris la Défense Cédex 45 (FR)**

(73) Titulaire : **SOCIETE NATIONALE ELF
AQUITAINE
Tour Elf, 2, Place de la Coupole, La Défense 6
F-92400 Courbevoie (FR)**
Titulaire : **ELF AQUITAINE NORGE A/S
Postboks 168
N-4001 Stavanger (NO)**

## Description

L'invention concerne un procédé de préparation d'un catalyseur apte à promouvoir la conversion oxydante du méthane en hydrocarbures en $C_2^+$ avec une activité et une sélectivité élevées.

Il n'existe actuellement, au stade industriel, aucun procédé permettant de convertir directement le méthane, hydrocarbure présentant un champ limité d'applications, en hydrocarbures supérieurs tels que l'éthylène, qui sont susceptibles de nombreuses utilisations dans divers domaines de l'industrie chimique.

Toutefois, nombreux sont les systèmes catalytiques qui ont été proposés, dans les dernières années, pour convertir le méthane, en présence d'oxygène, en hydrocarbures supérieurs et notamment en hydrocarbures en $C_2^+$, qui sont des mélanges d'éthylène, d'éthane et de faibles quantités d'hydrocarbures ayant au moins trois atomes de carbone dans la molécule, cette opération de conversion du méthane en hydrocarbures supérieurs étant couramment appelée conversion oxydante ou couplage oxydant du méthane.

Ainsi pour la conversion sélective du méthane en $C_2^+$ en présence d'oxygène, la citation DE-A-3237079 propose d'utiliser un catalyseur à base de PbO et de Si $O_2$ et la citation EP-A-0196541 décrit l'emploi d'un catalyseur Li/MgO, dans la formulation duquel le lithium est généralement introduit sous la forme de carbonate. De tels catalyseurs perdent rapidement leur activité aux températures nécessaires pour activer le méthane, qui sont de l'ordre de 750°C, étant donné qu'à ces températures PbO s'élimine par sublimation et le carbonate de lithium est instable et se décompose.

Dans la citation EP-A-0189079, un catalyseur à base de terres rares sous la forme d'oxydes est proposé pour réaliser la conversion du méthane en présence d'oxygène. Les résultats des essais présentés dans cette citation montrent que l'utilisation d'un tel catalyseur ne permet pas d'atteindre un rendement suffisant en éthylène et éthane. En effet la sélectivité en ces deux hydrocarbures est importante à faible taux de conversion du méthane, mais elle diminue rapidement lorsque la conversion augmente. L'emploi dudit catalyseur apparaît donc comme peu intéressant économiquement pour une mise en oeuvre industrielle de la conversion oxydante du méthane en hydrocarbures supérieurs.

La citation WO-A-86/07351 propose d'effectuer la conversion du méthane en présence d'oxygène en utilisant un catalyseur à base d'oxydes de terres rares dopés par addition d'oxydes de métaux des groupes IA et IIA du Tableau Périodique des Eléments, ce qui permet de travailler avec des vitesses spatiales du mélange méthane/oxygène nettement plus élevées que celles prévues dans la citation EP-A-0189079 et d'atteindre des taux plus élevés de conversion du méthane avec des sélectivités améliorées en hydrocarbures.

On a trouvé qu'un mélange d'oxydes de métaux des groupes IA et IIA et de métaux des terres rares n'était pas la forme la plus adaptée pour constituer un catalyseur actif et sélectif de conversion oxydante du méthane en hydrocarbures en $C_2^+$ et que l'on pouvait obtenir un catalyseur à base desdits métaux présentant des performances améliorées, lorsque le procédé de préparation du catalyseur passait par une étape de coprécipitation de ces métaux sous la forme de carbonates ou/et d'hydroxycarbonates.

L'invention propose donc un procédé particulier de préparation d'un catalyseur renfermant au moins un métal du groupe des lanthanides et au moins un métal alcalino-terreux, qui permet d'obtenir un catalyseur particulièrement actif et sélectif dans la conversion oxydante du méthane en hydrocarbures supérieurs et notamment en hydrocarbures en $C_2^+$.

Le procédé selon l'invention se caractérise en ce que l'on met en contact une phase aqueuse renfermant en solution des cations d'au moins un métal du groupe des lanthanides et d'au moins un métal alcalino-terreux avec une quantité suffisante d'une source d'ions carbonates et éventuellement d'une source d'ion hydroxydes pour former un coprécipité de carbonates ou/et d'hydroxycarbonates desdits métaux renfermant au moins 5% en poids de carbonates et amener le pH du milieu réactionnel résultant à une valeur supérieure à 8, on sépare le coprécipité d'avec le milieu réactionnel et soumet ledit coprécipité à un lavage puis à un séchage et l'on fait subir au coprécipité lavé et séché une calcination à une température comprise entre 400°C et 1000°C.

Avantageusement, avant de séparer le coprécipité d'avec le milieu réactionnel, on maintient ledit milieu réactionnel renfermant le coprécipité à une température allant de 60°C à 150°C pendant une durée comprise entre 30 minutes et 30 heures et de préférence entre 2 heures et 20 heures.

Les métaux du groupe des lanthanides susceptibles, suivant l'invention, de fournir une partie des cations en solution dans la phase aqueuse sont les métaux du Tableau Périodique des Eléments possédant les numéros atomiques 57 et 59 à 71, lesdits métaux étant notamment tels que lanthane, praséodyme, néodyme, samarium, europium, gadolinium, terbium, dysprosium, erbium, holmium, thulium, ytterbium et lutétium.

Les métaux alcalino-terreux susceptibles, suivant l'invention, de fournir les cations associés aux cations du ou des métaux du groupe des lanthanides sont les métaux du groupe IIA du Tableau Périodique des Eléments incluant beryllium, magnésium, calcium, strontium et baryum.

Les proportions respectives de cations du ou des métaux du groupe des lanthanides et de cations du ou

EP 0 349 419 B1

des métaux alcalino-terreux dans la phase aqueuse peuvent varier assez largement. En particulier, les pourcentages pondéraux respectifs L du ou des métaux du groupe des lanthanides et T du ou des métaux alcalino-terreux dans l'ensemble de ces deux types de métaux sont tels que $6 \leq L \leq 98$ et $2 \leq T \leq 94$ avec L + T = 100%.

Des cations d'un ou plusieurs métaux autres que les métaux du groupe des lanthanides et les métaux alcalino-terreux, notamment scandium, yttrium, lithium, peuvent être également présents dans la phase aqueuse en plus des cations des métaux alcalinoterreux et des cations du groupe des lanthanides. La quantité de ces cations additionnels représente jusqu'à 30% et de préférence jusqu'à 15% du poids global des cations issus du ou des métaux du groupe des lanthanides et du ou des métaux alcalino-terreux.

La source des cations présents dans la phase aqueuse consiste en composés hydrosolubles, par exemple chlorures, des métaux cités plus haut.

La source d'ions carbonates peut être choisie parmi les divers carbonates qui sont hydrosolubles aux concentrations employées, notamment carbonates des métaux alcalins tels que carbonate de sodium et carbonate de potassium, carbonate d'ammonium, carbonates d'ammonium quaternaires.

De même, la source d'ions hydroxydes peut être choisie parmi les divers hydroxydes qui sont hydrosolubles aux concentrations utilisées, notamment hydroxydes des métaux alcalins tels que les hydroxydes de sodium et de potassium, ou encore hydroxydes d'ammonium quaternaires.

La proportion de source d'ions carbonates utilisée seule ou les proportions respectives des sources d'ions carbonates et d'ions hydroxydes sont en particulier choisies pour que le coprécipité résultant de la mise en contact desdits ions carbonates ou carbonates et hydroxydes avec les cations présents dans la phase aqueuse renferme, en poids, 5% à 100% de carbonates et que le pH du milieu réactionnel soit amené à une valeur allant de 9,5 à 13,5.

La mise en contact des cations présents dans la phase aqueuse avec les ions carbonates ou avec les ions carbonates et les ions hydroxydes donnant naissance au coprécipité de carbonates ou de carbonates et d'hydroxycarbonates peut être réalisée de toute manière appropriée. Par exemple, la source d'ions carbonates, lorsqu'elle est utilisée seule, peut être ajoutée, en solution aqueuse, à la phase aqueuse renfermant les cations, ladite addition pouvant être effectuée en une ou plusieurs fractions ou bien encore en continu. Lorsque l'on utilise conjointement une source d'ions carbonates et une source d'ions hydroxydes pour former le coprécipité, la source d'ions hydroxydes et la source d'ions carbonates peuvent être ajoutées, en solution aqueuse, soit successivement soit en mélange ou bien encore simultanément et séparément, à la phase aqueuse renfermant les cations, chaque addition pouvant être effectuée en une ou plusieurs fractions ou bien encore en continu.

Une manière avantageuse de réaliser la mise en contact des cations présents dans la phase aqueuse avec les ions carbonates ou avec les ions carbonates et les ions hydroxydes donnant naissance au coprécipité consiste à mélanger en continu la phase aqueuse renfermant les cations avec une phase aqueuse alcaline renfermant en solution soit la source d'ions carbonates soit la source d'ions carbonates et la source d'ions hydroxydes, aux concentrations appropriées, en contrôlant les débits des phases aqueuses mises en présence de telle sorte que le coprécipité formé renferme au moins 5% en poids de carbonates et que le pH du milieu réactionnel formé soit maintenu à une valeur sensiblement constante tout au long de la coprécipitation, ladite valeur étant supérieure à 8 et de préférence allant de 9,5 à 13,5.

Le coprécipité résultant de la mise en contact des cations des métaux tels que précités avec les ions carbonates ou avec les ions carbonates et les ions hydroxydes et éventuellement soumis à la phase de maintien à la température de 60°C à 150°C, est séparé du milieu réactionnel par toute méthode connue, par exemple filtration ou centrifugation, puis soumis à un lavage à l'eau distillée ou déminéralisée jusqu'à élimination complète des ions gênants, par exemple ions chlorures, apportés par les sources de cations et séché de manière conventionnelle à des températures allant, par exemple, de 60°C à 90°C.

La calcination du coprécipité séché est réalisée par chauffage dudit coprécipité à des températures comprises entre 400°C et 1000°C comme indiqué précédemment et de préférence allant de 450°C à 800°C, ledit chauffage pouvant être réalisé à l'air ou en atmosphère inerte.

Le coprécipité calciné est mis en forme par toute technique connue, par exemple par une technique de pastillage, pour constituer le catalyseur utilisable dans les réacteurs catalytiques.

Le produit dont la préparation vient d'être décrite, est un catalyseur particulièrement actif et sélectif pour la conversion du méthane, en présence d'oxygène, en hydrocarbures supérieurs et notamment en hydrocarbures en $C_2^+$.

Le méthane que l'on soumet à la conversion catalytique oxydante peut être du méthane pur ou encore du méthane renfermant jusqu'à 10% en volume d'éthane comme c'est le cas pour le gaz naturel industriel.

L'oxygène mis en réaction avec le méthane est de préférence de l'oxygène pur, car l'utilisation d'air comme source d'oxygène, bien que possible, exige une séparation de l'azote avant recyclage du méthane non converti.

3

Le méthane et l'oxygène peuvent être amenés au contact du catalyseur soit sous la forme de courants séparés soit sous la forme d'un mélange préformé. Les quantités de méthane et d'oxygène mises en présence sont telles que le rapport molaire du méthane à l'oxygène ait une valeur allant de 1 à 20 et de préférence de 2 à 10.

Le catalyseur préparé selon l'invention permet de mettre en oeuvre la réaction de conversion du méthane à des températures comprises entre 600°C et 1100°C sans décomposition du catalyseur. Des températures préférées selon l'invention pour cette réaction vont de 700°C à 900°C.

Les pressions utilisables pour la mise en oeuvre de ladite réaction ne sont pas critiques. Elles peuvent notamment être comprises entre environ 1 et environ 50 bars et se situer de préférence entre 1 et 20 bars.

La vitesse spatiale du mélange gazeux de méthane et d'oxygène au contact du catalyseur, exprimée en litres de mélange gazeux par gramme de catalyseur et par heure, peut, selon l'invention, avoir une valeur comprise entre 3 et 1000. Des vitesses spatiales préférées ont des valeurs allant de 5 à 300.

L'invention est illustrée par les exemples suivants donnés à titre non limitatif.

EXEMPLE 1 :

On préparait une solution aqueuse de cations baryum et de cations lanthane en dissolvant 0,25 mole de $BaCl_2$, $2H_2O$ et 0,125 mole de $LaCl_3$, $6H_2O$ dans 1 litre d'eau distillée et l'on plaçait la solution obtenue dans un ballon de 2 l balayé par un courant d'azote.

Au contenu du ballon, maintenu à température anmbiante et sous agitation constante, on ajoutait goutte à goutte une solution aqueuse renfermant 0,25 M/l de Na OH et 0,25 M/l de $Na_2CO_3$ de manière à précipiter les cations baryum et lanthane sous la forme d'un coprécipité de carbonate et d'hydroxycarbonate, le débit d'addition de ladite solution étant réglé pour obtenir, après une durée d'addition de 2 heures, un milieu réactionnel ayant un pH égal à 10.

Le milieu réactionnel résultant, renfermant le coprécipité formé, était ensuite porté à 90°C et maintenu à cette température, toujours sous agitation, pendant une durée de 16 heures.

Le coprécipité était alors séparé du milieu réactionnel par filtration, puis lavé à l'eau distillée jusqu'à élimination complète des chlorures et enfin séché à 60°C.

Le précipité séché était ensuite soumis à une calcination à 500°C en présence d'air.

La composition du produit calciné, définie en oxydes métalliques et en équivalents carbonates exprimés en $CO_2$, est donnée ci-après en pourcentage en poids :

$La_2O_3$ 63,6%, BaO : 7,2% et $CO_2$ : 29,2%.

EXEMPLE 2 :

On opérait comme indiqué dans l'exemple 1, en partant d'une solution aqueuse de cations baryum et de cations lanthane préparée en dissolvant 0,278 mole de $BaCl_2$, $2H_2O$ et 0,139 mole de $LaCl_3$, $6H_2O$ dans 1 litre d'eau distillée.

La composition du produit obtenu par calcination du coprécipité séché, définie en oxydes métalliques et en équivalents carbonates exprimés en $CO_2$, était la suivante en pourcentage en poids :

$La_2O_3$ : 55%, BaO : 27% et $CO_2$ : 18%.

EXEMPLE 3 :

On préparait une solution aqueuse de cations baryum et de cations lanthane en dissolvant 0,6 mole de $BaCl_2$, $2H_2O$ et 0,2 mole de $LaCl_3$, $6H_2O$ dans 1 litre d'eau distillée.

On préparait également une solution précipitante aqueuse en dissolvant 3,2 mole de NaOH et $8 \times 10^{-3}$ mole de $Na_2CO_3$ dans 1 litre d'eau distillée.

Dans un ballon de 2 litres balayé par un courant d'azote, on introduisait en continu, simultanément et séparément, en opérant à température ambiante et sous agitation, d'une part la solution aqueuse de cations et d'autre part la solution aqueuse précipitante pour précipiter les cations sous la forme d'un coprécipité de carbonate et d'hydroxycarbonate, les débits des solutions introduites dans le ballon étant réglés pour maintenir le pH du milieu réactionnel résultant de la mise en contact desdites solutions à une valeur constante égale à 13.

4

Après introduction de 800 ml de solution aqueuse de cations dans le ballon, l'addition de ladite solution et celle de la solution précipitante étaient interrompues et le milieu réactionnel était encore maintenu sous agitation jusqu'à précipitation complète des cations.

Le milieu réactionnel renfermant le coprécipité était alors porté à 80°C et maintenu à cette température, toujours sous agitation, pendant une période de 5 heures.

Le coprécipité était alors séparé du milieu réactionnel par filtration, puis lavé à l'eau distillée jusqu'à élimination complète des chlorures et enfin séché à 60°C.

Le précipité séché était ensuite soumis à une calcination à 500°C en présence d'air. Le produit calciné formé consistait en un oxycarbonate de baryum et de lanthane.

La composition dudit produit calciné, définie comme indiqué dans l'exemple 1, était la suivante, en pourcentage en poids :

$$La_2O_3 : 38,8\%, BaO : 53,9\% \text{ et } CO_2 : 7,3\%.$$

## EXEMPLE 4 :

On préparait une solution aqueuse de cations magnésium et de cations samarium en dissolvant 0,75 mole de $MgCl_2$, $6H_2O$ et 0,25 mole de $SmCl_3$, $6H_2O$ dans 1 litre d'eau distillée.

On préparait également une solution précipitante aqueuse en dissolvant 1,6 moles de NaOH et 0,01 mole de $Na_2CO_3$ dans 1 litre d'eau distillée.

Dans un ballon de 2 litres balayé par un courant d'azote, on introduisait goutte à goutte, simultanément et séparément, en opérant à température constante et sous agitation, d'une part la solution aqueuse de cations et d'autre part la solution aqueuse précipitante pour précipiter les cations sous la forme d'un coprécipité de carbonate et d'hydroxycarbonate, les débits des solutions introduites dans le ballon étant réglés pour maintenir le pH du milieu réactionnel résultant de la mise en contact desdites solutions à une valeur constante égale à 10.

Après introduction de 800 ml de solution aqueuse de cations dans le ballon, l'addition de ladite solution et celle de la solution précipitante étaient interrompues et le milieu réactionnel était encore maintenu sous agitation jusqu'à précipitation complète des cations.

Le milieu réactionnel renfermant la coprécipité était alors porté à 70°C et maintenu à cette température, toujours sous agitation, pendant une période de 18 heures.

Le coprécipité était alors séparé du milieu réactionnel par filtration, puis lavé à l'eau distillée jusqu'à élimination complète des chlorures et enfin séché à 60°C.

Le précipité séché était ensuite calciné à 500°C en présence d'air.

Le produit calciné résultant consistait en un oxycarbonate de magnésium et de samarium.

La composition dudit produit calciné, définie comme indiqué dans l'exemple 1, était la suivante, en pourcentage en poids :

$$Sm_2O_3 : 48,7\%, MgO : 34,4\% \text{ et } CO_2 : 16,9\%$$

## EXEMPLE 5 :

On préparait une solution aqueuse de cations baryum et de cations samarium en dissolvant 0,75 mole de $BaCl_2$, $2H_2O$ et 0,25 mole de $SmCl_3$, $6H_2O$ dans un litre d'eau distillée.

On préparait également une solution précipitante aqueuse en dissolvant 10 moles de NaOH et 0,12 mole de $Na_2CO_3$ dans 1 litre d'eau distillée.

Dans un ballon de 2 litres balayé par un courant d'azote, on introduisait goutte à goutte simultanément et séparément, en opérant à température ambiante et sous agitation, d'une part la solution aqueuse de cations et d'autre part la solution aqueuse précipitante pour précipiter les cations sous la forme d'un coprécipité de carbonate et d'hydroxycarbonate, les débits des solutions introduites dans le ballon étant réglés pour maintenir le pH du milieu réactionnel résultant de la mise en contact desdites solutions à une valeur constante égale à 13.

Après introduction de 800 ml de solution aqueuse de cations dans le ballon, l'addition de ladite solution et celle de la solution précipitante étaient interrompues et le milieu réactionnel était encore maintenu sous agitation jusqu'à précipitation complète des cations.

Le milieu réactionnel renfermant le coprécipité était alors porté à 70°C et maintenu à cette température, toujours sous agitation, pendant une période de 18 heures. Le coprécipité était alors séparé du milieu réactionnel par filtration, puis lavé à l'eau distillée jusqu'à élimination complète des chlorures et enfin séché à 60°C.

Le précipité séché était ensuite calciné à 500°C en présence d'air. Le produit calciné résultant consistait en un oxycarbonate de baryum et de samarium.

La composition dudit produit calciné, définie comme indiqué dans l'exemple 1, était la suivante, en pourcentage en poids :

$$Sm_2O_3 : 53,3\%, BaO : 25\% \text{ et } CO_2 : 21,7\%$$

## EXEMPLE 6 :

Les solides calcinés obtenus dans les exemple 1 à 5 selon l'invention étaient utilisés en tant que catalyseurs dans des essais de conversion oxydante du méthane en hydrocarbures supérieurs.

Des essais témoins étaient également réalisés en utilisant les produits suivants en tant que catalyseurs :

● Produit A : Oxyde de lanthane $La_2O_3$ renfermant en poids 7,2% de BaO et obtenu par imprégnation d'oxyde lanthane par la quantité appropriée de solution aqueuse de nitrate de baryum, puis séchage du produit imprégné à 110°C pendant 12 heures et enfin calcination à 600°C pendant 4 heures.

● Produit B : Carbonate de baryum obtenu par précipitation en mélangeant des volumes égaux d'une solution aqueuse 0,2 M de $BaCl_2$, $2H_2O$ et d'une solution aqueuse 0,2 M de $Na_2CO_3$, puis successivement séparation du précipité par filtration, lavage du précipité à l'eau distillée jusqu'à élimination des chlorures, séchage à 60°C pendant 24 heures et enfin calcination à 600°C pendant 4 heures à l'air.

● Produit C : Carbonate de lanthane obtenu par précipitation en mélangeant des volumes égaux d'une solution aqueuse 0,2 M de $LaCl_3$, $6H_2O$ et d'une solution aqueuse 0,2 M de carbonate de sodium, puis successivement séparation du précipité par filtration, lavage du précipité à l'eau distillée jusqu'à élimination des chlorures, séchage à 60°C pendant 24 heures et enfin calcination à 600°C pendant 4 heures à l'air.

Les essais de conversion catalytique oxydante du méthane étaient réalisés comme suit.

On opérait avec un dispositif comportant un réacteur tubulaire monté dans un four pourvu d'un système de régulation de température, l'une des extrémités du réacteur étant reliée à un conduit d'amenée de mélange gazeux équipé d'un débimètre et l'autre extrémité du réacteur étant connectée à un condenseur maintenu à 0°C et relié lui-même à un système de prise d'échantillons d'un analyseur chromatographique.

Un mélange de 2 g du catalyseur choisi, ledit catalyseur se présentant sous la forme de particules ayant une granulométrie de 1 à 2 mm, et de grains de quartz dans un rapport volumétrique du catalyseur au quartz égal à 1 : 2 était placé dans le réacteur tubulaire et maintenu en place dans ledit réacteur par des tampons de lamé de quartz. Le mélange catalytique occupait dans le réacteur une position plaçant ledit mélange sensiblement au milieu de la zone de chauffe du four lorsque le réacteur était en place dans le four.

Le four renfermant le réacteur chargé du mélange catalytique étant amené la température requise pour l'essai, on injectait dans le réacteur, par le conduit d'amenée de gaz, un mélange gazeux préchauffé à 450°C et constitué de méthane et d'oxygène pur dans un rapport molaire approprié, ledit mélange gazeux circulant avec une vitesse spatiale contrôlée par le débimètre monté sur le conduit d'amenée de gaz. A la sortie du réacteur, le mélange gazeux réactionnel résultant de la conversion était refroidi dans le condenseur, puis dirigé vers le système de prise d'échantillons de l'analyseur chromatographique aux fins d'analyses qualitative et quantitative.

Les conditions opératoires spécifiques à chaque essai ainsi que les résultats obtenus sont rassemblés dans le tableau ci-après.

EP 0 349 419 B1

TABLEAU

| ORIGINE DU CATALYSEUR | RAPPORT MOLAIRE $CH_4 : O_2$ | TEMPERATURE de CONVERSION (°C) | VITESSE SPATIALE $(l.g^{-1}.h^{-1})$ | POURCENTAGE de CONVERSION $CH_4$ | $O_2$ | SELECTIVITE (% CARBONE) $C_2H_4$ | $C_2H_6$ | $C_3$ | $C_2^+$ | CO | $CO_2$ |
|---|---|---|---|---|---|---|---|---|---|---|---|
| EXEMPLE 1 | 6 | 752 | 30,1 | 21,5 | 99,8 | 37,5 | 31,1 | 3,4 | 72 | 3 | 25 |
| EXEMPLE 2 | 6 | 738 | 33,1 | 18,9 | 99,9 | 42,5 | 25,7 | 2,3 | 70,5 | 3,4 | 26,1 |
| EXEMPLE 3 | 6 | 750 | 30,3 | 16 | 91,7 | 17,2 | 22,2 | 2,5 | 41,9 | 2,6 | 55,3 |
| EXEMPLE 3 | 6 | 837 | 180 | 16,3 | 92,4 | 23,6 | 36,1 | 3,2 | 62,9 | 4,5 | 32,6 |
| EXEMPLE 4 | 6 | 746 | 5,1 | 15,7 | 99,9 | 20,1 | 29,3 | | 49,4 | 12,3 | 38,3 |
| EXEMPLE 5 | 6 | 750 | 26 | 18,1 | 99,9 | 35,2 | 30,5 | 2,5 | 68,2 | 3,8 | 28 |
| Produit A | 6 | 782 | 15 | 19,1 | 99,8 | 25,6 | 30,9 | 3,5 | 60 | 6,9 | 33,1 |
| Produit B | 10 | 800 | 5,1 | 10,1 | 84,6 | 31,7 | 28,6 | | 60,3 | 4 | 35,7 |
| Produit C | 10 | 750 | 5,1 | 10,4 | 99,4 | 22,4 | 22,1 | 2,1 | 46,6 | 5,8 | 47,6 |

La comparaison des résultats figurant au tableau fait ressortir les performances améliorées des catalyseurs selon l'invention. En particulier, pour des taux comparables en oxyde de baryum, le catalyseur préparé dans l'exemple 1 conduit à un taux de conversion du méthane légèrement plus élevé avec une sélectivité en hydrocarbures en $C_2^+$ substantiellement améliorée par rapport à ce qui est obtenu en utilisant le produit A comme catalyseur, c'est-à-dire un produit renfermant les éléments baryum et lanthane sous la forme d'oxydes. En outre, les catalyseurs selon l'invention conduisent à des taux de conversion du méthane substantiellement plus élevés que ceux obtenus dans des conditions comparables avec des catalyseurs consistant en carbonate de baryum (produit B) ou en carbonate de lanthane (produit C), sans que la sélectivité en hydrocarbures soit affectée. De plus, les catalyseurs selon l'invention permettent de travailler avec des vitesses spatiales importantes.

## Revendications

1. Procédé de préparation d'un catalyseur renfermant au moins un métal du groupe des lanthanides et au moins un métal alcalino-terreux sous la forme de carbonates et/ou d'oxycarbonates, caractérisé en ce que l'on met en contact une phase aqueuse renfermant en solution des cations d'au moins un métal du groupe des lanthanides possédant les numéros atomiques 57 et 59 à 71 dans le Tableau Périodique des Eléments et des cations d'au moins un métal alcalino-terreux avec une quantité suffisante d'une source d'ions carbonates et éventuellement d'une source d'ions hydroxydes pour former un coprécipité de carbonates ou/et d'hydroxycarbonates desdits métaux renfermant au moins 5% en poids de carbonates et amener le pH du milieu réactionnel résultant à une valeur supérieure à 8, on sépare le coprécipité d'avec le milieu réactionnel et soumet ledit coprécipité à un lavage puis à un séchage et l'on fait subir au coprécipité lavé et séché une calcination à une température entre 400°C et 1000°C.

2. Procédé selon la revendication 1, caractérisé en ce qu'avant de séparer le coprécipité d'avec le milieu réactionnel, on maintient ledit milieu réactionnel renfermant le coprécipité à une température allant de 60°C à 150°C pendant une durée comprise entre 30 minutes et 30 heures et de préférence entre 2 heures et 20 heures.

3. Procédé selon la revendication 1 ou 2, caractérisé en ce que le ou les métaux du groupe des lanthanides sont choisis parmi lanthane, praséodyme, néodyme, samarium, europium, gadolinium, terbium, dysprosium, erbium, holmium, thulium, ytterbium et lutétium.

4. Procédé selon l'une des revendications 1 à 3, caractérisé en ce que le métal ou les métaux alcalino-terreux sont choisis parmi beryllium, magnésium, calcium, strontium et baryum.

5. Procédé selon l'une des revendications 1 à 4, caractérisé en ce que les pourcentages pondéraux respectifs L du ou des métaux du groupe des lanthanides et T du ou des métaux alcalino-terreux fournissant les cations présents dans la phase aqueuse dans l'ensemble desdits métaux sont choisis de telle sorte que $6 \leq L \leq 98$ et $2 \leq T \leq 94$ avec L + T = 100%.

6. Procédé selon l'une des revendications 1 à 5, caractérisé en ce que la phase aqueuse, outre les cations du ou des métaux du groupe des lanthanides et les cations du ou des métaux alcalino-terreux, renferme également en solution des cations additionnels d'un ou plusieurs autres métaux, notamment tels que scandium, yttrium et lithium.

7. Procédé selon la revendication 6, caractérisé en ce que la quantité desdits cations additionnels représente jusqu'à 30% et de préférence jusqu'à 15% du poids global des cations issus du ou des métaux du groupe des lanthanides et du ou des métaux alcalino-terreux.

8. Procédé selon l'une des revendications 1 à 7, caractérisé en ce que la source d'ions carbonates est choisie parmi les carbonates des métaux alcalins, le carbonate d'ammonium et les carbonates d'ammonium quaternaires.

9. Procédé selon l'une des revendications 1 à 8, caractérisé en ce que la source d'ions hydroxydes est choisie parmi les hydroxydes des métaux alcalins et les hydroxydes d'ammonium quaternaires.

10. Procédé selon l'une des revendications 1 à 9, caractérisé en ce que la proportion de source d'ions carbonates ou les proportions respectives des sources d'ions carbonates et d'ions hydroxydes sont choisies pour que le coprécipité résultant de la mise en contact desdits ions avec les cations présents dans la phase aqueuse renferme, en poids, 5% à 100% de carbonates et que le pH du milieu réactionnel soit amené à une valeur allant de 9,5 à 13,5.

11. Procédé selon l'une des revendications 1 à 10, caractérisé en ce que les cations présents dans la phase aqueuse sont mis en contact uniquement avec une source d'ions carbonates ajoutée sous la forme d'une solution aqueuse à ladite phase aqueuse, ladite addition étant réalisée en une ou plusieurs fractions ou bien encore en continu.

12. Procédé selon l'une des revendications 1 à 10, caractérisé en ce que les cations présents dans la phase aqueuse sont mis en contact avec une source d'ions hydroxydes et une source d'ions carbonates, ladite mise en contact étant réalisée en ajoutant la source d'ions hydroxydes et la source d'ions carbonates, sous la forme de solutions aqueuses, soit successivement soit en mélange ou bien encore simultanément et séparément, à la phase aqueuse renfermant les cations, chaque addition étant effectuée en une ou plusieurs fractions ou bien encore en continu.

13. Procédé selon l'une des revendications 1 à 10, caractérisé en ce que la mise en contact des cations présents dans la phase aqueuse avec les ions carbonates ou avec les ions carbonates et les ions hydroxydes est réalisée en mélangeant en continu la phase aqueuse renfermant les cations avec une phase aqueuse alcaline renfermant en solution soit la source d'ions carbonates soit la source d'ions carbonates et la source d'ions hydroxydes, aux concentrations appropriées, en contrôlant les débits des phases aqueuse mises en présence de telle sorte que le coprécipité formé renferme au moins 5% en poids de carbonates et que le pH du milieu réactionnel produit soit maintenu à une valeur sensiblement constante tout au long de la coprécipitation, ladite valeur étant supérieure à 8 et de préférence allant de 9,5 à 13,5.

14. Procédé selon l'une des revendications 1 à 13, caractérisé en ce que le coprécipité séparé d'avec le milieu réactionnel est lavé à l'eau distillée ou déminéralisée jusqu'à élimination complète des ions gênants.

15. Procédé selon l'une des revendications 1 à 14, caractérisé en ce que le coprécipité lavé est séché à des températures allant de 60°C à 90°C.

16. Procédé selon l'une des revendications 1 à 15, caractérisé en ce que le coprécipité séché est calciné à des températures allant de 450°C à 800°C.

17. Procédé de conversion oxydante du méthane en hydrocarbures supérieurs et notamment en hydrocarbures en $C_2^+$, dans lequel on fait passer un mélange gazeux renfermant du méthane et de l'oxygène au contact d'un catalyseur, à une température comprise entre 600°C et 1100°C, caractérisé en ce que ledit catalyseur est un catalyseur obtenu par le procédé selon l'une des revendications 1 à 16.

18. Procédé selon la revendication 17, caractérisé en ce que le rapport molaire du méthane à l'oxygène dans le mélange gazeux mis en contact avec le catalyseur a une valeur allant de 1 à 20 et de préférence de 2 à 10.

19. Procédé selon la revendication 17 ou 18, caractérisé en ce que la température de mise en oeuvre de la conversion a une valeur allant de 700°C à 900°C.

20. Procédé selon l'une des revendications 17 à 19, caractérisé en ce que la vitesse spatiale du mélange gazeux à base de méthane et d'oxygène au contact du catalyseur prend des valeurs qui, exprimées en litres de mélange gazeux par gramme de catalyseur et par heure, sont comprises entre 3 et 1000 et de préférence se situent de 5 à 300.

21. Procédé selon l'une des revendications 17 à 20, caractérisé en ce que la conversion est mise en oeuvre sous des pressions comprises entre environ 1 bar et environ 50 bars et de préférence entre 1 et 20 bars.

## Patentansprüche

1. Verfahren zur Herstellung eines Katalysators, der wenigstens ein Metall der Gruppe der Lanthanide und wenigstens ein Erdalkalimetall in Form von Carbonaten und/oder Hydroxycarbonaten enthält, dadurch **gekennzeichnet**, daß man eine wässerige Phase, die Kationen wenigstens eines Metalls der Gruppe der Lanthanide mit den Ordnungszahlen 57 und 59 bis 71 des Periodensystems und Kationen wenigstens eines Erdalkalimetalls in Lösung enthält, mit einer ausreichenden Menge einer Carbonationenquelle und gegebenenfalls einer Hydroxidionenquelle zur Bildung eines Copräzipitats von Carbonaten und/oder Hydroxycarbonaten der genannten Metalle mit wenigstens 5 Gew.-% Carbonaten und Einstellung des pH's des Reaktionsmediums auf einen Wert von über 8, umsetzt und das Copräzipitat vom Reaktionsmedium abtrennt, es wäscht, trocknet und danach bei einer Temperatur zwischen 400 und 1000°C glüht.

2. Verfahren nach Anspruch 1, dadurch **gekennzeichnet**, daß man vor der Abtrennung des Copräzipitats vom Reaktionsmedium das das Reaktionsmedium enthaltende Copräzipitat bei einer Temperatur von 60 bis 150°C während 30 Minuten bis 30 Stunden, vorzugsweise 2 bis 20 Stunden, hält.

3. Verfahren nach Anspruch 1 oder 2, dadurch **gekennzeichnet**, daß das Metall oder die Metalle der Gruppe der Lanthanide, ausgewählt ist bzw. sind unter Lanthan, Praseodym, Neodym, Samarium, Europium, Gadolinium, Terbium, Dysprosium, Erbium, Holmium, Thulium, Ytterbium und Lutetium.

4. Verfahren nach einem der Ansprüche 1 bis 3, dadurch **gekennzeichnet**, daß das (die) Erdalkalimetall(e) ausgewählt ist (sind) unter Beryllium, Magnesium, Calcium, Strontium und Barium.

5. Verfahren nach einem der Ansprüche 1 bis 4, dadurch **gekennzeichnet**, daß der Gewichtsprozentgehalt L des Metalls oder der Metalle der Lanthanide und T des Erdalkalimetalls bzw. der Erdalkalimetalle, das (die) in der wässerigen Phase vorliegenden Kationen liefern, bezogen auf die Gesamtheit der Metalle, so gewählt ist, daß $6 \leq L \leq 98$ und $2 \leq T \leq 94$, wobei $L + T = 100\%$.

6. Verfahren nach einem der Ansprüche 1 bis 5, dadurch **gekennzeichnet,** daß die wässerige Phase neben den Kationen des Metalls oder der Metalle der Lanthanide und den Kationen des Erdalkalimetalls bzw. der Erdalkalimetalle auch noch zusätzliche Kationen eines oder mehrerer anderer Metalle, insbesondere Scandium, Yttrium und Lithium, in Lösung enthält.

7. Verfahren nach Anspruch 6, dadurch **gekennzeichnet**, daß die Menge der zusätzlichen Kationen bis zu 30%, vorzugsweise bis zu 15% des Gesamtgewichts der Kationen des Metalls oder der Metalle der Lanthanide und den Kationen des Erdalkalimetalls bzw. der Erdalkalimetalle ausmacht.

8. Verfahren nach einem der Ansprüche 1 bis 7, dadurch **gekennzeichnet**, daß die Carbonationenquelle ausgewählt wird unter Alkalimetallcarbonaten, Ammoniumcarbonat und quaternären Ammoniumcarbonaten.

9. Verfahren nach einem der Ansprüche 1 bis 8, dadurch **gekennzeichnet**, daß die Hydroxidionenquelle ausgewählt wird unter Alkalimetallhydroxiden und quaternären Ammoniumhydroxiden.

10. Verfahren nach einem der Ansprüche 1 bis 9, dadurch **gekennzeichnet**, daß das Verhältnis der Carbonationenquelle oder die Verhältnisse der Carbonationenquelle und der Hydroxidionenquelle so gewählt werden, daß das bei der Umsetzung dieser Ionen mit den in der wässerigen Phase vorliegenden Kationen erhaltene Copräzipitat 5 bis 100 Gew.-% Carbonate enthält und der pH des Reaktionsmediums auf einen Wert zwischen 9,5 und 13,5 eingestellt wird.

11. Verfahren nach einem der Ansprüche 1 bis 10, dadurch **gekennzeichnet**, daß die in der wässerigen Phase vorliegenden Kationen ausschließlich mit einer Carbonationenquelle umgesetzt werden, die dieser in Form einer wässerigen Lösung zugesetzt wird, wobei die Zugabe in einer oder mehreren Portionen oder auch kontinuierlich erfolgt.

12. Verfahren nach einem der Ansprüche 1 bis 10, dadurch **gekennzeichnet**, daß die in der wässerigen Phase vorliegenden Kationen mit einer Hydroxidionenquelle und einer Carbonationenquelle umgesetzt werden, wobei diese Quellen in Form wässeriger Lösungen nacheinander, im Gemisch oder gleichzeitig und getrennt, der die Kationen enthaltenden wässerigen Phase zugesetzt werden, wobei jede Zugabe in einer oder mehreren Portionen oder kontinuierlich erfolgt.

13. Verfahren nach einem der Ansprüche 1 bis 10, dadurch **gekennzeichnet**, daß die Umsetzung der in der wässerigen Phase vorliegenden Kationen mit den Carbonationen oder den Carbonat- und Hydroxidionen durch kontinuierliches Mischen der die Kationen enthaltenden wässerigen Phase mit einer alkalischen wässerigen Phase, welche die Carbonationenquelle oder diese und die Hydroxidionenquelle in Lösung enthält, in geeigneten Konzentrationen durchgeführt wird, wobei die Durchflußmenge der wässerigen Phasen so gewählt wird, daß das gebildete Copräzipitat wenigstens 5 Gew.-% Carbonate enthält und der pH des Reaktionsmediums während der Copräzipitation konstant bleibt und über 8 und vorzugsweise zwischen 9,5 und 13,5 liegt.

14. Verfahren nach einem der Ansprüche 1 bis 13, dadurch **gekennzeichnet**, daß das vom Reaktionsmedium abgetrennte Copräzipitat mit destilliertem oder entmineralisiertem Wasser bis zur vollständigen Entfernung der störenden Ionen gewaschen wird.

15. Verfahren nach einem der Ansprüche 1 bis 14, dadurch **gekennzeichnet**, daß das gewaschene Copräzipitat bei Temperaturen zwischen 60 und 90°C getrocknet wird.

16. Verfahren nach einem der Ansprüche 1 bis 15, dadurch **gekennzeichnet**, daß das getrocknete Copräzipitat bei Temperaturen zwischen 450 und 800°C geglüht wird.

17. Verfahren zur oxidativen Umwandlung von Methan zu höheren Kohlenwasserstoffen und insbesondere zu $C_2$-Kohlenwasserstoffen durch Leiten eines Methan und Sauerstoff enthaltenden Gasgemisches über einen Katalysator bei einer Temperatur zwischen 600 und 1100°C, dadurch **gekennzeichnet**, daß der Katalysator nach dem Verfahren nach einem der Ansprüche 1 bis 16 erhalten wurde.

18. Verfahren nach Anspruch 17, dadurch **gekennzeichnet**, daß das Molverhältnis von Methan zu Sauerstoff in dem mit dem Katalysator kontaktierten Gasgemisch zwischen 1 und 20 und vorzugsweise zwischen 2 und 10 liegt.

19. Verfahren nach Anspruch 17 oder 18, dadurch **gekennzeichnet**, daß die Umwandlungstemperatur zwischen 700 und 900°C liegt.

20. Verfahren nach einem der Ansprüche 17 bis 19, dadurch **gekennzeichnet**, daß die Volumengeschwindigkeit des Gasgemisches aus Methan und Sauerstoff im Kontakt mit dem Katalysator, ausgedrückt in Liter Gasgemisch pro Gramm Katalysator und Stunde, zwischen 3 und 1000 und vorzugsweise zwischen 5 und 300 liegt.

21. Verfahren nach einem der Ansprüche 17 bis 20, dadurch **gekennzeichnet**, daß die Umwandlung unter Drükken zwischen 1 und ca. 50 bar und vorzugsweise zwischen 1 und 20 bar durchgeführt wird.

## Claims

1. Process for preparing a catalyst containing at least one metal of the lanthanide group and at least one alkaline earth metal in the form of carbonates and/or oxycarbonates, characterised in that an aqueous phase containing in solution cations of at least one metal of the lanthanide group having the atomic numbers 57 and 59 to 71 in the Periodic Table, and cations of at least one alkaline earth metal and a sufficient quantity of a carbonate ion source, and possibly of a hydroxide ion source, are brought into contact to form a coprecipitate of the carbonates and/or the hydrocarbonates of the said metals containing at least 5 weight Percent of carbonates and to bring the pH of the resultant reaction medium to a value greater than 8, the coprecipitate is separated from the reaction medium and subjected to a washing process and then a drying process, and the washed and dried coprecipitate is submitted to calcination at a temperature of between 400°C and 1000°C.

2. Process according to claim 1, characterised in that before the coprecipitate is separated from the reaction medium, the said reaction medium containing the coprecipitate is maintained at a temperature of 60°C to 150°C for a period of between 30 minutes and 30 hours and preferably of between 2 hours and 20 hours.

3. Process according to claim 1 or claim 2, characterised in that the metal or metals of the lanthanide group are selected from among lanthanum, praseodymium, neodymium, samarium, europium, gadolinium, terbium, dysprosium, erbium, holmium, thulium, ytterbium and lutetium.

4. Process according to one of claims 1 to 3, characterised in that the alkaline earth metal or metals is/are selected from among beryllium, magnesium, calcium, strontium and barium.

5. Process according to one of claims 1 to 4, characterised in that the respective weight percentages L of the metal or metals of the lanthanide group and T of the alkaline earth metal or metals, providing the cations present in the aqueous phase in the mixture of the said metals, are selected such that $6 \leq L \leq 98$ and $2 \leq T \leq 94$ where L + T = 100%.

6. Process according to one of claims 1 to 5, characterised in that the aqueous phase, apart from the cations of the metal or metals of the lanthanide group and the cations of the alkaline earth metal or metals contains, also in solution, additional cations of one or more other metals, in particular such as scandium, yttrium and lithium.

7. Process according to claim 6, characterised in that the quantity of the said additional cations represents up to 30% and preferably up to 15% of the total weight of the cations from the metal or metals of the lanthanide group and of the alkaline earth metal or metals.

8. Process according to one of claims 1 to 7, characterised in that the source of carbonate ions is selected from among the alkaline metal carbonates, ammonium carbonate and quaternary ammonium carbonates.

9. Process according to one of claims 1 to 8, characterised in that the source of hydroxide ions is selected from among alkali metal hydroxides and quaternary ammonium hydroxides.

10. Process according to one of claims 1 to 9, characterised in that the proportion of carbonate ion source or the respective proportions of carbonate ion and hydroxide ion sources are selected such that the coprecipitate resulting from the said ions coming into contact with the cations present in the aqueous phase, contain 5 to 100 weight per cent of carbonates and such that the pH of the reaction medium is increased to a value of 9.5 to 13.5.

11. Process according to one of claims 1 to 10, characterised in that the cations present in the aqueous phase are brought into contact only with a carbonate ion source added in the form of an aqueous solution to the said aqueous phase, the said addition being carried out in one or more steps or even continuously.

12. Process according to one of claims 1 to 10, characterised in that the cations in the aqueous phase are brought into contact with a hydroxide ion source and a carbonate ion source, the said process being carried out by adding the hydroxde ion source and the carbonate ion source, in the form of aqueous solutions either successively or in a mixture or even simultaneously and separately, to the aqueous phase containing the cations, each addition being performed in one or more steps or even continuously.

13. Process according to one of claims 1 to 10, characterised in that the cations present in the aqueous phase are brought into contact with the carbonate ions or with the carbonate ions and the hydroxide ions by continuously mixing the aqueous phase containing the cations with an alkaline aqueous phase containing in solution either carbonate ion source or the carbonate ion source and the hydroxide ion source, in appropriate concentrations, by controlling the flow rates of the aqueous phases brought into contact in such a way that the coprecipitate formed contains at least 5 weight per cent of carbonates and that the pH of the reaction medium produced is maintained at a value that is substantially constant during the coprecipitation process, the said value being greater than 8 and preferably being between 9.5 and 13.5.

14. Process according to one of claims 1 to 13, characterised in that the coprecipitate separated from the reaction medium is washed with distilled or demineralised water until the undesirable ions are completely eliminated.

15. Process according to one of claims 1 to 14, characterised in that the washed coprecipitate is dried at temperatures of between 60°C and 90°C.

16. Process according to one of claims 1 to 15, characterised in that the dried coprecipitate is calcined at temperatures of between 450°C and 800°C.

17. Process for the oxidative conversion of methane into higher hydrocarbons and in particular into hydrocarbons in $C_2^+$, in which a gaseous mixture containing methane and oxygen is passed in contact with a catalyst, at a temperature between 600°C and 1100°C, characterised in that the said catalyst is a catalyst obtained by the process according to one of claims 1 to 16.

18. Process according to claim 17, characterised in that the molecular ratio of methane to oxygen in the gaseous mixture brought into contact with the catalyst has a value of between 1 and 20 and preferably of between 2 and 10.

19. Process according to claim 17 or 18, characterised in that the temperature at which the conversion is carried out is between 700°C and 900°C.

20. Process according to one of claims 17 to 19, characterised in that the space velocity of the methane and oxygen-based gaseous mixture in contact with the catalyst has values which, expressed in litres of gaseous mixture per gram of catalyst and per hour, are between 3 and 1000 and are preferably located between 5 and 300.

21. Process according to one of claims 17 to 20, characterised in that the conversion is carried out at pressures of between approximately 1 bar and approximately 50 bars and preferably between 1 and 20 bars.